Europäisches Patentamt

European Patent Office

Office européen des brevets

(11) Veröffentlichungsnummer : **0 101 056**
**B1**

(12) **EUROPÄISCHE PATENTSCHRIFT**

(45) Veröffentlichungstag der Patentschrift :
27.05.87

(21) Anmeldenummer : **83107869.6**

(22) Anmeldetag : **09.08.83**

(51) Int. Cl.⁴ : **H 04 J   3/06**

(54) **Synchronisieranordnung.**

(30) Priorität : **12.08.82 DE 3230027**

(43) Veröffentlichungstag der Anmeldung :
**22.02.84 Patentblatt 84/08**

(45) Bekanntmachung des Hinweises auf die Patenterteilung : **27.05.87 Patentblatt 87/22**

(84) Benannte Vertragsstaaten :
**AT CH DE FR GB IT LI SE**

(56) Entgegenhaltungen :
**EP-A- 0 040 351**
**FR-A- 2 467 516**

(73) Patentinhaber : **Siemens Aktiengesellschaft Berlin
und München**
**Wittelsbacherplatz 2**
**D-8000 München 2 (DE)**

(72) Erfinder : **Fladerer, Heinrich, Ing. grad.**
**Thomas-Diewald-Strasse 3**
**D-8033 Planegg (DE)**

## 0 101 056

### Beschreibung

Die Erfindung bezieht sich auf eine Anordnung zur Synchronisierung von abgehenden Kanälen an den Ausgängen eines Demultiplexers mittels eines im ankommenden Kanal blockweise auftretenden Rahmenkennungsworts in einem Zeitmultiplexsystem.

Bei Synchronisieranordnungen in Zeitmultiplexsystemen, die mit niederen Bitraten arbeiten, erfolgt die Synchronisierung am Eingang des Demultiplexers wie z. B. aus der EP-A-40 351 bekannt. Für Bitraten von 140 Mbit/s oder 565 Mbit/s ergeben sich dabei geschwindigkeitsbedingte Schwierigkeiten.

Aufgabe der Erfindung ist es, eine Synchronisieranordnung anzugeben, die bei einer Bitrate von 140 Mbit/s oder 565 Mbit/s zu arbeiten vermag, die in einer integrierten Schaltung (Gate-Array) in ECL-Technologie (Emitter-Coupled-Logic) realisierbar ist und die die CCITT-Empfehlung nach dem Gelbbuch Vol. III, Seiten 219 bis 220 (Fascicle III. 3-Rec. G 922, Abschnitt 3,4) erfüllt. Nach dieser Empfehlung darf die Kanal-Zuordnung erst dann geändert werden, wenn das Rahmenkennungswort viermal hintereinander nicht erkannt worden ist.

Ausgehend von einer Anordnung der einleitend geschilderten Art wird diese Aufgabe erfindungsgemäß dadurch gelöst, daß im Übertragungsweg ein erster Speicher, ein zweiter Speicher, ein mit dem ersten Speicher und dem zweiten Speicher verbundener Kanalverteiler und ein dritter Speicher vorgesehen sind, daß im Steuerweg zwischen dem ersten Speicher und dem Kanalverteiler ein Decodierer, ein vierter Speicher, ein fünfter Speicher und ein Codierer vorgesehen sind und daß hinter dem vierten und fünften Speicher eine Verknüpfungsanordnung mit nachgeschalteten Rahmenzähler vorgesehen sind, der den fünften Speicher und die Verknüpfungsanordnung steuert.

Bei einer Synchronisieranordnung zur Synchronisierung von vier abgehenden Kanälen auf ein zwölfstelliges blockweises Rahmenkennungswort ist eine Ausgestaltung der Erfindung gemäß den Unteransprüchen vorteilhaft.

Ebenfalls vorteilhaft ist, daß der Demultiplexen als eine Kettenschaltung aus Leitungselementen mit einer Signallaufzeit einer Bitlänge des Zeitmultiplexsignals ausgeführt werden kann, wie es in der EP-A-103 163 beansprucht ist.

Anhand von Ausführungsbeispielen wird die Erfindung nachstehend näher erläutert.

Figur 1  zeigt eine erfindungsgemäße Synchronisieranordnung,

Figur 2  zeigt detailliert die im Übertragungsweg liegenden Teile der Anordnung,

Figur 3  zeigt detailliert den Steuerweg mit dem Decodierer, dem Codierer, den zwischengeschalteten Speichern sowie der Verknüpfungsanordnung,

Figur 4  zeigt den Rahmenzähler,

Figur 5  zeigt einen Codierer,

Figur 6  zeigt eine Taktversorgung und

Figur 7  zeigt einen Pulsplan zur Erläuterung der Wirkungsweise der Synchronisieranordnung.

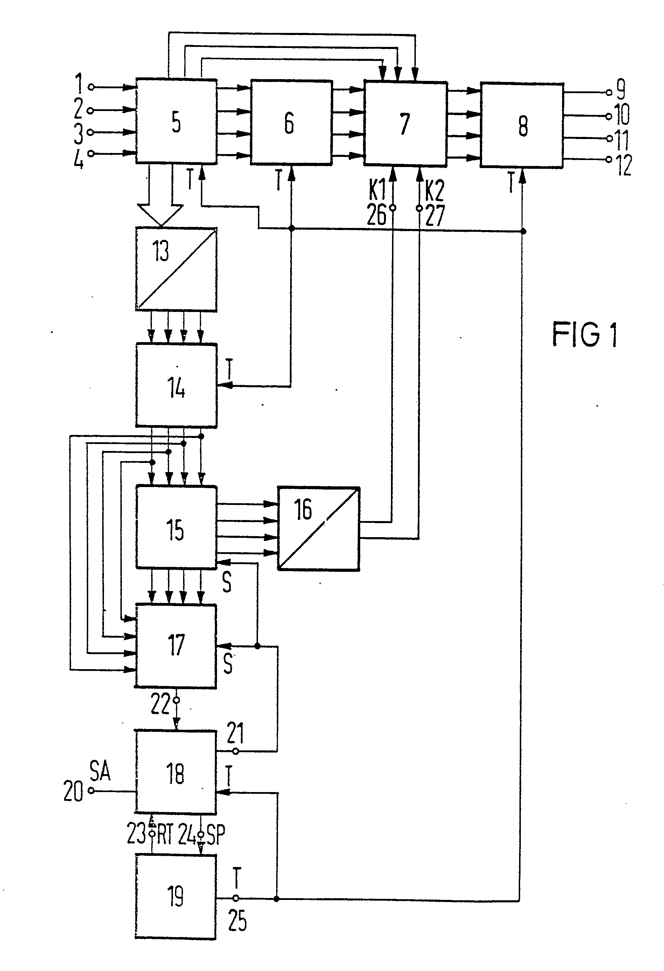

Fig. 1 zeigt die erfindungsgemäße Synchronisieranordnung. Sie enthält Speicher 5, 6, 8, 14 und 15, einen Kanalverteiler 7, einen Decodierer 13, einen Codierer 16, eine Verknüpfungsanordnung 17, einen Rahmenzähler 18 und eine Taktversorgung 19. Die Eingänge 1 bis 4 des Speichers 5 sind mit den Ausgängen des Demultiplexers des Systems und die Ausgänge 9 bis 12 mit den abgehenden Kanälen des Systems zu verbinden. T bedeutet Takt, RT bedeutet Rahmentakt, S bedeutet Steuersignal, SP bedeutet Setzpuls, SA bedeutet Synchronisiationsanzeige und K1 und K2 Kanalverteilsignale.

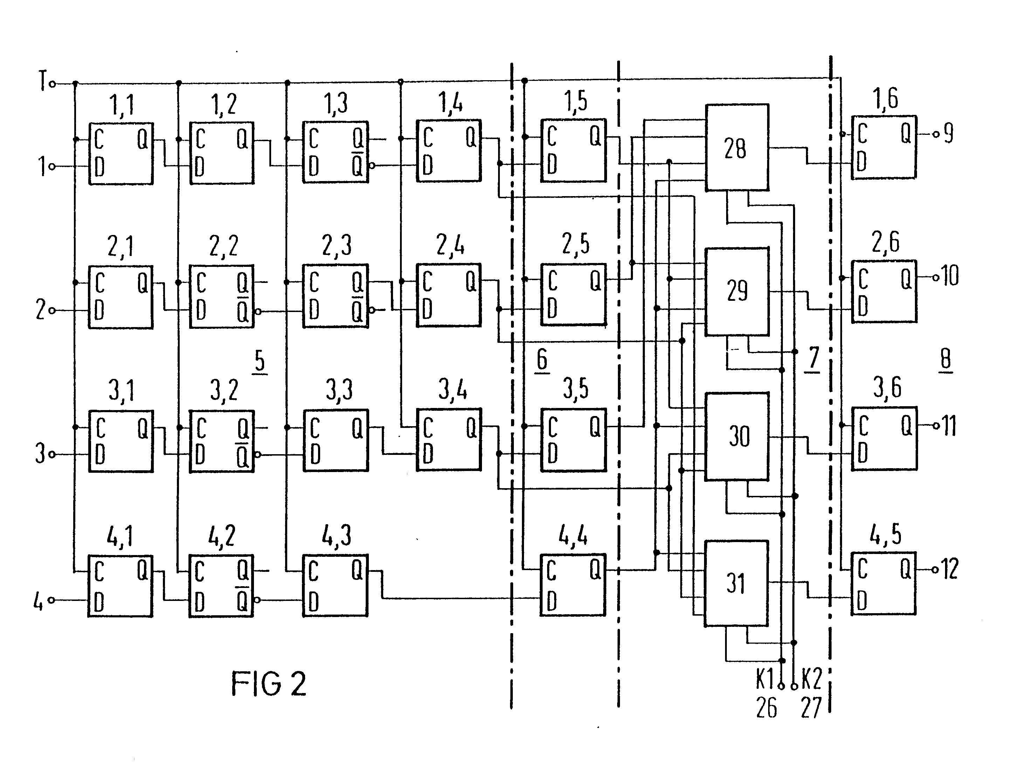

Die Wirkungsweise der Synchronisieranordnung wird nach der Beschreibung der Detailanordnungen in den Figuren 2 bis 4 erläutert.

Figur 2 zeigt den vollständigen Übertragungsweg zwischen den Eingängen 1 bis 4 und den Ausgängen 9 bis 12 mit den Speichern 5 und 6, dem Kanalverteiler 7 und dem weiteren Speicher 8. Mit Bezugszeichen, die aus zwei durch einen Punkt verbundenen Ziffern bestehen, sind D-Flipflops bezeichnet. Die erste Ziffer bezeichnet den Kanal, die zweite Ziffer die Position des D-Flipflops in Übertragungsrichtung. Mit 28 bis 31 sind Multiplexer bezeichnet.

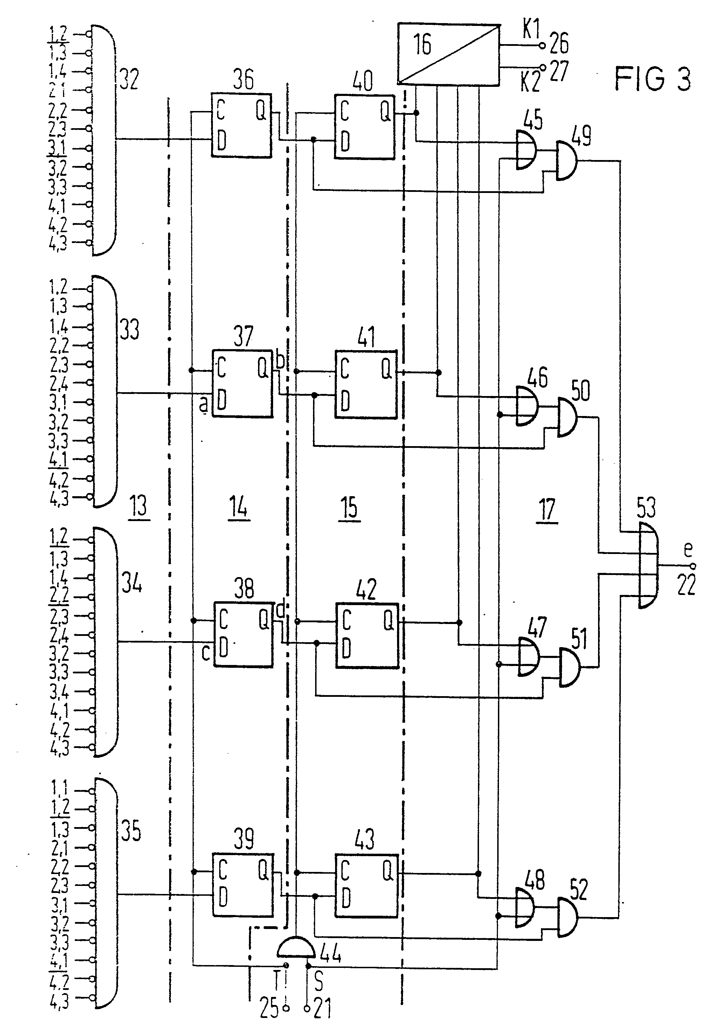

Figur 3 zeigt detailliert den Decodierer 13, die Speicher 14 und 15, und die Verknüpfungsanordnung 17 sowie den Codierer 16.

Der Decodierer 13 besteht aus vier UND-Gattern 32 bis 35, deren Eingänge mit Q oder $\bar{Q}$ Ausgängen von D-Flipflops nach Figur 2 entsprechend der Bezeichnung verbunden sind. Ein Querstrich über der D-Flipflop-Bezeichnung bedeutet eine Abnahme am invertierten Ausgang $\bar{Q}$.

Die Speicher 14 und 15 bestehen jeweils aus vier D-Flipflops (36 bis 39 ; 40 bis 43). Die Takteingänge der D-Flipflops im Speicher 14 sind mit dem Taktanschluß 25, die Takteingänge der D-Flipflops im Speicher 15 sind mit dem Ausgang eines UND-Gatters 44 verbunden. Ein Eingang des UND-Gatters 44 is mit dem Takteingang 25 und der andere Eingang ist mit dem Steuersignaleingang 21 verbunden.

Die Verknüpfungsanordnung 17 enthält ODER-Gatter 45 bis 48 und 53 sowie UND-Gatter 49 bis 52.

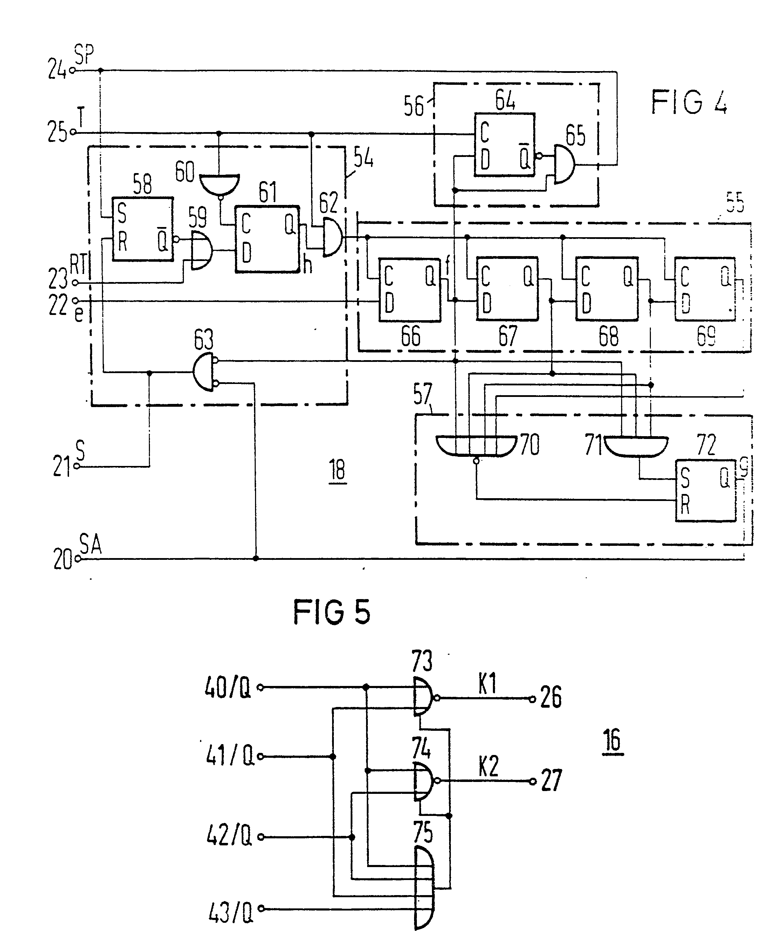

Figur 4 zeigt den Rahmenzähler 18 mit einer Ansteueranordnung 54, einer Setzimpulsanordnung 56, einem Schieberegister 55 und einer Überwachungsanordnung 57.

Die Ansteueranordnung 54 enthält ein RS-Flipflop 58, ein D-Flipflop 61, ein ODER-Gatter 59, ein UND-Gatter 62, einen Inverter 60 und ein UND-Gatter 63 mit invertierenden Eingängen. Die Setzimpulsanordnung 56 besteht aus einem D-Flipflop 64 und einem UND-Gatter 65. Das Schieberegister 55 enthält vier D-

2

Flipflops 66 bis 69. Die Überwachungsanordnung 57 besteht aus einem NOR-Gatter 70, einem UND-Gatter 71 und einem RS-Flipflop 72.

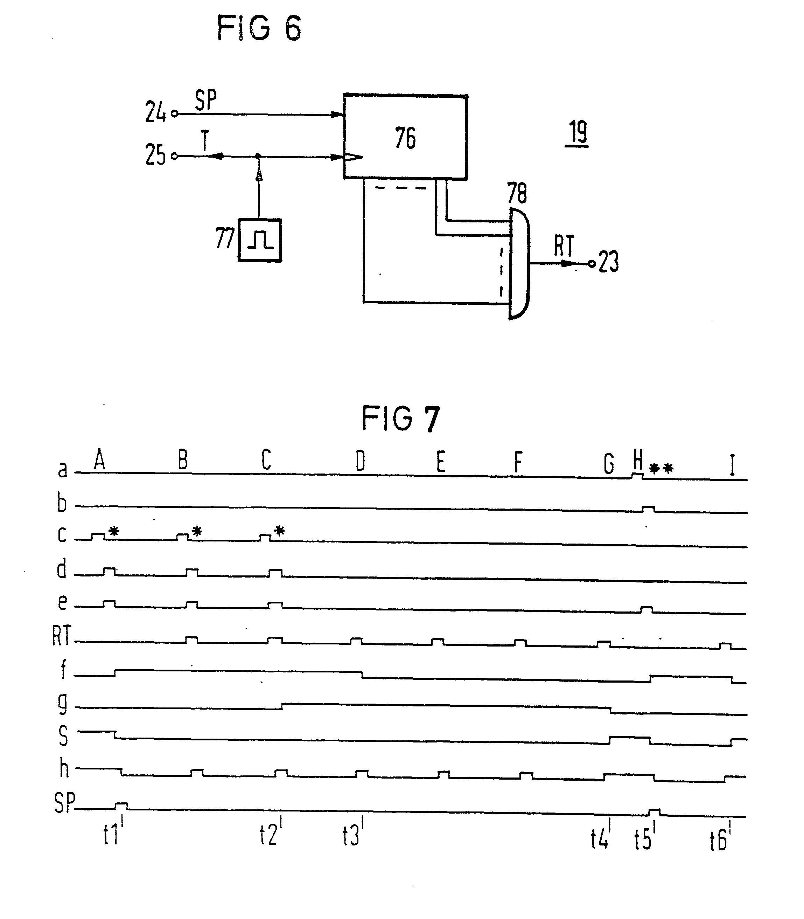

Die Wirkungsweise der erfindungsgemäßen Synchronisieranordnung wird nachstehend anhand der Figuren 1 bis 4 sowie des Pulsplans nach Figur 7 erläutert :

An die Eingänge 1 bis 4 der Synchronisieranordnung werden vier Zeitmultiplexsignale angelegt, die durch bitweise Verteilung in einem Demultiplexer aus einem Zeitmultiplexsignal höherer Ordnung gewonnen wurden. Die vier Zeitmultiplexsignale laufen durch die Synchronisiereinrichtung auf dem Übertragungsweg zu den Ausgangen 9 bis 12.

Mittels des Decodierers 13 wird festgestellt, ob ein Rahmenkennungswort des Zeitmultiplexsignals höherer Ordnung 111110100000 im Speicher 5 auftritt. Das erste durch den Decodierer 15 erkannte Rahmenkennungswort wird im Speicher 15 gespeichert und im Codierer 16 in den Code K1, K2 gewandelt, der den Kanalverteiler 7 steuert. Damit ist dieselbe Kanalzuordnung wie beim Multiplexer auf der Sendeseite gegeben.

Figur 2 zeigt den Übertragungsweg der erfindungsgemäßen Synchronisieranordnung im Detail. Der Speicher 5 enthält im ersten Kanal vier D-Flipflops 1.1 bis 1.4, im zweiten Kanal vier D-Flipflops 2.1 bis 2.4, im dritten Kanal vier D-Flipflops 3.1 bis 3.4 und im vierten Kanal drei D-Flipflops 4.1 bis 4.3. Zur Vereinfachung des Speichers 5 wurden viele platzsparende D-Flipflops ohne invertierenden Ausgang $\bar{Q}$ verwendet. Damit ein einfacher Decodierer 13 verwendet werden kann, werden die Daten nach den D-Flipflops 1.3, 2.2, 3.2 und 4.2 invertiert weiter geschoben. Somit benötigen lediglich diese D-Flipflops und das D-Flipflops 2.3 für die Decodierung einen invertierenden Ausgang $\bar{Q}$ neben dem nicht invertierenden Ausgang Q. In den fünfzehn D-Flipflops des Speichers 5 kann das zwölfstellige Rahmenkennungswort in vier benachbarten überlappenden Positionen auftreten. Bei der ersten Position ist es beispielsweise in den D-Flipflops 3.4, 2.4, 1.4, 4.3, 3.3, 2.3, 1.3, 4.2, 3.2, 2.2, 1.2 und 4.1 in der Reihenfolge des Rahmenkennungswortes enthalten ; in der zweiten Position liegt es zwischen den D-Flipflops 2.4 und 3.1, in der dritten Position zwischen den D-Flipflops 1.4 und 2.1 und in der vierten Position zwischen den D-Flipflops 4.3 und 1.1.

Die Ausgänge der D-Flipflops im Speicher 5 sind durch im Übertragungsweg nachfolgende D-Flipflops und die angeschlossenen UND-Gatter 32 bis 35 des Decodierers 13 belastet. Eine zu große Belastung führt bei 140 Mbit/s oder 565 Mbit/s Übertragungsgeschwindigkeit zu unzulässigen Betriebsverhältnissen, die einen Funktionsausfall bewirken. Deshalb werden vor der Kanalverteilung die vier Zeitmultiplexsignale um einen Schritt weitergeschoben, was mittels des zweiten Speichers 6 möglich ist.

Der Kanalverteiler 7 wird jetzt nur noch an die weniger belasteten D-Flipflops 1.4, 2.4, 3.4, 1.5, 2.5, 3.5 und 4.4 angeschlossen.

Im Kanalverteiler 7 erfassen je nach dem an den Steuereingängen 26 und 27 anliegenden Codewort die vier Multiplexer 28 bis 31 die synchrone der vier Positionen und schalten diese über den Speicher 8 auf die Ausgänge 9 bis 12 durch. Die Zwischenspeicherung ist wegen der hohen Bitrate notwendig. Die D-Flipflops 1.6, 2.6, 3.6 und 4.5 geben die Datensignale — bedingt durch den Aufbau des Speichers 5 — invertiert ab.

Im Decodierer 13 nach Figur 3 erfaßt eines der vier UND-Gatter 32 bis 35 das Rahmenkennungswort und gibt ein Signal an ein nachgeschaltetes D-Flipflop im Speicher 14 ab. Dieses wird über das nachgeschaltete D-Flipflop im Speicher 15 an den Codierer 16 und die Verknüpfungsanordnung 17 dann weitergegeben, wenn am Eingang 21 ein Steuersignal S vom Rahmenzähler 18 anliegt. Dies ist der Fall, wenn die Anordnung nicht synchron arbeitet und im D-Flipflop 66 im Schieberegister 55 die Information « kein Rahmenkennungswort erkannt » gespeichert ist.

Im nichtsynchronen Zustand schalten die Verknüpfungsanordnung 17 alle Eingänge des Speichers 15 auf ihren Ausgang 22 durch. Beim ersten erkannten Rahmenkennungswort wird das entsprechende Ausgangssignal des Speichers 14 im nachfolgenden D-Flipflop des Speichers 15 gespeichert und zum Ausgang 22 weitergeleitet über den es in den Rahmenzähler 18 gelangt. Das Steuersignal S erhält jetzt den logischen Zustand « O », wodurch die Taktversorgung des Speichers 15 abgeschaltet wird und nur noch über den durchgeschalteten Kanal Impulse zum Ausgang 22 gelangen können. Der synchrone Zustand ist bei drei erkannten Rahmenkennungswörtern erreicht. Dies ändert sich erst dann, wenn das Steuersignal S den logischen Zustand « 1 » annimmt und alle ODER-Gatter 45 bis 48 durchschaltet.

Die Ausgangsimpulse der Verknüpfungsanordnung 17, die « Rahmenkennungswort erkannt » bedeuten, werden über den Anschluß 22 in das Schieberegister 55 des Rahmenzählers 18 eingespeist. Dieses Schieberegister 55 wird mit den Ausgangsimpulsen der Ansteueranordnung 54 getaktet.

Das RS-Flipflop wird mit dem Setzimpuls SP der Setzimpulsanordnung 56 gesetzt. Zurückgesetzt wird es, wenn die Anordnung nicht synchron ist und das D-Flipflop 66 die Information « kein Rahmenkennungswort erkannt » gespeichert hat, wobei die Verknüpfung über das UND-Gatter 63 erfolgt. Die Freigabesignale für den Takt des Schieberegisters 55, also entweder das Ausgangssignal des RS-Flipflops 58 oder der Rahmentakt RT aus der Taktversorgung 19 werden mit dem ODER-Gatter 59 verknüpft und zum D-Flipflop 61 weitergeleitet, das über den Inverter 60 getaktet wird. Das Ausgangssignal dieses D-Flipflops 61 gibt über das UND-Gatter 62 den Takt T für das Schieberegister 55.

Der Takt T liegt demnach ständig am Schieberegister 55, wenn die Anordnung nicht synchron ist im D-Flipflop 66 die Information « kein Rahmenkennungswort erkannt » gespeichert ist. Ein Takt T liegt pro Rahmen an, wenn die Anordnung synchron ist oder das D-Flipflop 66 die Information « Rahmenkennungswort erkannt » gespeichert hat.

In der Überwachungsanordnung 57 speichert das RS-Flipflop 72, ob die Anordnung synchron oder nichtsynchron ist. Synchron ist sie dann, wenn drei Rahmenkennungswörter hintereinander richtig erkannt wurden. Dies ist dann der Fall, wenn das UND-Gatter 71 ein Signal abgibt. Werden hintereinander vier Rahmenkennungswörter nicht erkannt, so gibt das NOR-Gatter 70 ein Signal ab und setzt das RS-Flipflop 72 zurück, die Anordnung ist nicht synchron.

Beim ersten erkannten Rahmenkennungswort wechselt am D-Flipflop 66 das Signal vom logischen Zustand « O » zum logischen Zustand « 1 ». Ein Bit später wechselt der $\bar{Q}$-Ausgang des D-Flipflops 64 in der Setzimpulsanordnung 56 vom logischen Zustand « 1 » in den logischen Zustand « O ». Durch die Verknüpfung dieser beiden Signale mit dem UND-Gatter 65 steht der Setzimpuls SP für die Taktversorgung 19 mit einer Breite von einem Bit zur Verfügung.

Fig. 5 zeigt den Codierer 16, der einen Code gemäß nachfolgender Tabelle in einen dualen Code umsetzt.

| 40/Q | 41/Q | 42/Q | 43/Q | K1 | K2 |
|------|------|------|------|-----|-----|
| H | L | L | L | L | L |
| L | H | L | L | H | L |
| L | L | H | L | L | H |
| L | L | L | H | H | H |
| L | L | L | L | Z | Z |

Links sind die logischen Zustände H $\hat{=}$ High-Pegel und L $\hat{=}$ Low-Pegel an den Q-Ausgängen der D-Flipflops 40 bis 43 und rechts an den Ausgängen 26 und 27 in Fig. 3 dargestellt. Z bedeutet einen hochohmigen Zustand.

Der Codierer 16 enthält zwei NOR-Gatter 73 und 74 mit 3-State-Ausgängen und ein ODER-Gatter 75.

Fig. 6 zeigt die Taktversorgung 19 mit einem Rahmenlängenzähler 76, einem Taktgenerator 77 und mit einem UND-Gatter 78.

Der Rahmenlängenzähler 76 zählt die Anzahl der Bits pro Kanal, welche in einem Rahmen vorkommen. Wird im nichtsynchronen Zustand ein Rahmenkennungswort gefunden, so setzt der Setzpuls SP den Rahmenlängenzähler 76 auf den Anfangswert. Wird ein neues Rahmenkennungswort erwartet, so gibt das UND-Gatter 78 einen 1 Bit breiten Rahmentaktimpuls RT ab.

Der Pulsplan nach Figur 7 zeigt wesentliche Funktionsabläufe.

a) ist der logische Zustand am Eingang des D-Flipflops 37,

b) ist der logische Zustand am Ausgang des D-Flipflops 37,

c) ist der logische Zustand am Eingang des D-Flipflops 38,

d) ist der logische Zustand am Ausgang des D-Flipflops 38 und

e) ist der logische Zustand am Ausgang 22 des ODER-Gatters 53 und somit der Verknüpfungsanordnung 17,

f) ist weiterhin der logische Zustand am Ausgang des D-Flipflops 66 im Schieberegister 55,

g) ist der logische Zustand am Ausgang des RS-Flipflops 72 in der Überwachungsanordnung 57 und

h) ist der logische Zustand am Ausgang des D-Flipflops 61 in der Ansteueranordnung 54.

Es bedeuten

A) erstes erkanntens Rahmenkennungswort,

B) zweites erkanntes Rahmenkennungswort,

C) drittes erkanntes Rahmenkennungswort,

D) erstes nichterkanntes Rahmenkennungswort,

E) zweites nichterkanntes Rahmenkennungswort,

F) drittes nichterkanntes Rahmenkennungswort,

G) viertes nichterkanntes Rahmenkennungswort,

H) erstes erneut erkanntes Rakmenkennungswort und

I) zweites jetzt nicht erkanntes Rahmenkennungswort.

Im Zeitraum bis $t_1$ wird gesucht. Im Zeitraum zwischen $t_1$ und $t_2$ wird aufsynchronisiert, d. h. es wird viermal hintereinander ein Rahmenkennungswort gefunden. Bis zum Zeitpunkt $t_2$ ist die Anordnung nicht synchron. Im Zeitraum zwischen $t_2$ und $t_4$ ist die Anordnung synchron. Im Zeitraum zwischen $t_3$ und $t_4$ wird absynchronisiert, d. h. es wurde viermal hintereinander kein Rahmenkennungswort gefunden. Ab dem Zeitpunkt $t_4$ ist die Anordnung wieder nichtsynchron. Im Zeitraum von $t_4$ bis $t_5$ wird gesucht, im Zeitraum von $t_5$ bis $t_6$ wird aufsynchronisiert und ab dem Zeitpunkt $t_6$ wird wieder gesucht.

* (Figur 7) bedeutet, daß das erste Bit des Rahmenkennungswortes im dritten Kanal des Speichers 5 liegt :

** (Figur 7) bedeuten, daß das erste Bit des Rahmenkennungswortes im zweiten Kanal des ersten Speichers liegt. Die Rahmenlänge ist in der Darstellung stark verkürzt ; die Gatterlaufzeiten wurden zur besseren Übersicht nicht berücksichtigt.

**Patentansprüche**

1. Anordnung zur Synchronisierung von abgehenden Kanälen an den Ausgängen eines Demultiplexers mittels eines im ankommenden Kanal blockweise auftretenden Rahmenkennungswort in einem Zeitmultiplexsystem, dadurch gekennzeichnet, daß im Übertragungsweg ein erster Speicher (5), ein zweiter Speicher (6), ein mit dem ersten Speicher (5) und dem zweiten Speicher (6) verbundener Kanalverteiler (7) und ein dritter Speicher (8) vorgesehen sind, daß im Steuerweg zwischen dem ersten Speicher (5) und dem Kanalverteiler (7) ein Decodierer (13), ein vierter Speicher (14), ein fünfter Speicher (15) und ein Codierer (16) vorgesehen sind und daß hinter dem vierten (14) und fünften (15) Speicher eine Verknüpfungsanordnung (17) mit nachgeschalteten Rahmenzähler (18) vorgesehen sind, der den fünften Speicher (15) und die Verknüpfungsanordnung (17) steuert (Fig. 1).

2. Anordnung nach Anspruch 1 für vier abgehende Kanäle zur Synchronisierung auf ein zwölfstelliges blockweises Rahmenkennungswort, dadurch gekennzeichnet, daß im ersten Speicher (5) im ersten Kanal vier D-Flipflops (1.1 bis 1.4), im zweiten Kanal vier D-Flipflops (2.1 bis 2.4), im dritten Kanal vier D-Flipflops (3.1 bis 3.4) sowie im vierten Kanal drei D-Flipflops (4.1 bis 4.3) in Kette geschaltet sind, wobei im ersten Kanal beim dritten D-Flipflop (1.3) und im zweiten, dritten und vierten Kanal beim zweiten D-Flipflop (2.2, 3.2, 4.2) der Q̄-Ausgang verwendet wird, während bei den restlichen D-Flipflops der Q-Ausgang angeschlossen ist (Fig. 2).

3. Anordnung nach Anspruch 2, dadurch gekennzeichnet, daß im zweiten (6) und dritten (8) Speicher je ein D-Flipflop (1.5, 2.5, 3.5, 4.4 ; 1.6, 2.6, 3.6, 4.5) lediglich mit einem Q-Ausgang pro Kanal vorgesehen sind und daß die Takteingänge (C) aller dieser D-Flipflops miteinander verbunden sind (Fig. 2).

4. Anordnung nach Anspruch 2, dadurch gekennzeichnet, daß im Kanalverteiler (7) vier Multiplexer (28 bis 31) mit je zwei Eingängen (26, 27) für ein Steuercodewort vorgesehen sind, daß beim ersten Multiplexer (28) der erste Eingang mit dem Q-Ausgang des D-Flipflops (3.5) im dritten Kanal, der zweite Eingang mit dem Q-Ausgang des D-Flipflops (2.5) im zweiten Kanal, der dritte Eingang mit den Ausgang des D-Flipflops (1.5) im ersten Kanal und der vierte Eingang mit dem Q-Ausgang des D-Flipflops (4.4) im vierten Kanal des zweiten Speichers (6) verbunden ist, daß beim zweiten Multiplexer (29) der erste Eingang mit dem Q-Ausgang des D-Flipflops (2.5) im zweiten Kanal, der zweite Eingang mit dem Q-Ausgang des D-Flipflops (1.5) im ersten Kanal und der dritte Eingang mit dem Ausgang des D-Flipflops (4.4) im vierten Kanal des zweiten Speichers (6) und der vierte Eingang mit dem Q-Ausgang des letzten D-Flipflops (2.4) im zweiten Kanal des ersten Speichers (5) verbunden ist, daß beim dritten Multiplexer (30) der erste Eingang mit dem Q-Ausgang des D-Flipflops (1.5) im ersten Kanal und der zweite Eingang mit dem Q-Ausgang des D-Flipflops (4.4) im vierten Kanal des zweiten Speichers (6) und der dritte Eingang mit dem Q-Ausgang des letzten D-Flipflops (3.4) im dritten Kanal und der vierte Eingang mit dem Q-Ausgang des letzten D-Flipflops (2.4) im zweiten Kanal des ersten Speichers (5) verbunden ist und daß beim vierten Multiplexer (31) der erste Eingang mit dem Q-Ausgang des D-Flipflops (4.4) im vierten Kanal des zweiten Speichers (6), der zweite Eingang mit dem Ausgang des letzten D-Flipflops (3.4) im dritten Kanal, der dritte Eingang mit dem Q-Ausgang des letzten D-Flipflops (2.4) im zweiten Kanal und der vierte Eingang mit dem Q-Ausgang des letzten D-Flipflops (1.4) im ersten Kanal des ersten Speichers (5) verbunden ist (Fig. 2).

5. Anordnung nach Anspruch 1, dadurch gekennzeichnet, daß im Decodierer (13) vor UND-Gatter (32 bis 35) mit invertierenden Eingängen vorgesehen sind, daß die Eingänge des ersten UND-Gatters (3.2) mit den Ausgängen des zweiten (1.2), des dritten (1.3) und des vierten (1.4) D-Flipflops im ersten Kanal und mit den Ausgängen des ersten (2.1, 3.1, 4.1), des zweiten (2.2, 3.2, 4.2) und des dritten (2.3, 3.3, 4.3) D-Flipflops im zweiten, dritten und vierten Kanal des ersten Speichers (5) verbunden sind, wobei beim dritten D-Flipflop (1.3) im ersten Kanal und beim zweiten D-Flipflop (3.2) im dritten Kanal der Q̄-Ausgang und bei den restlichen D-Flipflops der Q-Ausgang benutzt wird, daß die Eingänge des zweiten UND-Gatters (33) mit den Ausgängen des zweiten (1.2, 2.2) des dritten (1.3, 2.3) und des vierten (1.4, 2.4) D-Flipflops im zweiten und dritten Kanal und mit den Ausgängen des ersten (3.1, 4.1), zweiten (3.2, 4.2) und dritten (3.3, 4.3) D-Flipflops im dritten und vierten Kanal verbunden sind, wobei beim zweiten D-Flipflop (4.2) im vierten Kanal der Q̄-Ausgang und bei den restlichen D-Flipflops der Q-Ausgang benützt wird, daß die Eingänge des dritten UND-Gatters (34) mit den Ausgängen des zweiten (1.2, 2.2, 3.2) dritten (1.3, 2.3, 3.3) und vierten (1.4, 2.4, 3.4) D-Flipflops im ersten, zweiten und dritten Kanal und mit den Ausgängen des ersten (4.1), zweiten (4.2) und dritten (4.3) D-Flipflops im vierten Kanal des ersten Speichers (5) verbunden sind, wobei beim dritten D-Flipflop (1.3, 2.3) im ersten und zweiten Kanal der Q̄-Ausgang und bei den restlichen D-Flipflops der Q-Ausgang benutzt wird und daß die Eingänge des vierten UND-Gatters (35) mit den Ausgängen des ersten (1.1, 2.1, 3.1, 4.1), zweiten (1.2, 2.2, 3.2, 4.2) und dritten (1.3, 2.3, 3.3, 4.3) D-Flipflops im ersten, zweiten, dritten und vierten Kanal des ersten Speichers (5) verbunden sind, wobei beim dritten D-Flipflop (1.3) im ersten Kanal und beim zweiten D-Flipflop (4.2) im vierten Kanal der Q̄-Ausgang und bei den restlichen D-Flipflops der Q-Ausgang benötigt wird (Fig. 3).

6. Anordnung nach Anspruch 2, dadurch gekennzeichnet, daß im vierten Speicher (14) nach jedem der vier Ausgänge des Decodierers (13) ein D-Flipflop (36 bis 39) mit einem Q-Ausgang vorgesehen ist und daß die Takteingänge (C) aller D-Flipflops (36 bis 39) miteinander verbunden sind (Fig. 3).

7. Anordnung nach Anspruch 2, dadurch gekennzeichnet, daß im fünften Speicher (15) nach jedem Ausgang des vierten Speichers (14) ein D-Flipflop (40 bis 43) mit einem Q-Ausgang vorgesehen ist und daß ein fünftes UND-Gatter (44) vorgesehen ist, dessen erster Eingang als Takteingang (25) und dessen zweiter Eingang (21) als Steuersignaleingang dient und dessen Ausgang mit den Takteingängen (C) aller D-Flipflops (40 bis 43) verbunden ist (Fig. 3).

8. Anordnung nach Anspruch 2, dadurch gekennzeichnet, daß in der Verknüpfungsanordnung (17) ODER-Gatter (45 bis 48), deren einer Eingang jeweils mit dem Q-Ausgang eines D-Flipflops (40 bis 43) im fünften Speicher (15) und deren anderer Eingang jeweils mit dem Steuersignaleingang (21) verbunden sind, sechste UND-Gatter (49 bis 52), deren Eingang mit dem Ausgang jeweils eines der ODER-Gatter (45 bis 48) und deren anderer Eingang jeweils mit dem D-Eingang des vorgeschalteten D-Flipflops (40 bis 43) im fünften Speicher (15) verbunden ist, und ein weiteres ODER-Gatter (53) vorgesehen ist, dessen Eingänge jeweils mit einem Ausgang der UND-Gatter (49 bis 52) verbunden sind (Fig. 3).

9. Anordnung nach Anspruch 2, dadurch gekennzeichnet, daß in dem Rahmenzähler (18) ein Schieberegister (55), dessen Eingang mit dem Ausgang (22) der Verknüpfungsanordnung (17) verbunden ist und eine der Kanalzahl im Übertragungsweg entsprechende Anzahl von D-Flipflops (58 bis 61) mit Q-Ausgang aufweist, eine Ansteueranordnung (54) für das Schieberegister (55), eine Setzimpulsanordnung (56) für eine Taktversorgung (19) und eine Überwachungsanordnung (57) vorgesehen sind (Fig. 4).

10. Anordnung nach einem der vorhergehenden Ansprüche, gekennzeichnet, durch die Anwendung bei einer Bitrate von 140 Mbit/s und 565 Mbit/s im ankommenden Kanal.

## Claims

1. An arrangement for synchronising outgoing channels with the outputs of a demultiplexer by means of a frame code word, which occurs block-wise in the incoming channel, in a t.d.m. system, characterised in that the transmission path includes a first store (5), a second store (6), a channel distributor (7) which is connected to the first store (5) and to the second store (6), and a third store (8), that the control path between the first store (5) and the channel distributor (7) includes a decoder (13), a fourth store (14), a fifth store (15) and a coder (16) and that the fourth store (14) and the fifth store (15) are followed by a logic-linking arrangement (17) which is connected at its output to a frame counter (18) which controls the fifth store (15) and the logic-linking arrangement (17) (Fig. 1).

2. An arrangement as claimed in claim 1 for four outgoing channels for synchronisation to a twelve-digit, block frame code word, characterised in that in the first store (5) in the first channel four D flip-flops (1.1 to 1.4) are connected in a chain arrangement, in the second channel four D flip-flops (2.1 to 2.4), in the third channel four D flip-flops (3.1 to 3.4) and in the fourth channel three D flip-flops (4.1 to 4.3), where the $\overline{Q}$-output is employed in the case of the third D flip-flop (1.3) in the first channel and in the case of the second D flip-flop (2.2, 3.2, 4.2) in the second, third and fourth channels, whereas the Q-output is connected in the case of the remaining D flip-flops (Fig. 2).

3. An arrangement as claimed in claim 2, characterised in that in the second store (6) and the third store (8) each include D flip-flops (1.5, 2.5, 3.5, 4.4 ; 1.6, 2.6, 3.6, 4.5) only with one Q-output per channel and that the clock inputs (C) of all these D flip-flops are connected to one another (Fig. 2).

4. An arrangement as claimed in claim 2, characterised in that in the channel distributor (7) four multiplexers (28 to 31) are provided each having two inputs (26, 27) for a control code word, that in the case of the first multiplexer (28) the first input is connected to the Q-output of the D flip-flop (2.5) in the second channel, the third input is connected to the output of the D flip-flop (1.5) in the first channel and the fourth input is connected to the Q-output of the D flip-flop (4.4) in the fourth channel of the second store (6), that in the case of the second multiplexer (29) the first input is connected to the Q-output of the D flip-flop (2.5) in the second channel, the second input is connected to the Q-output of the D flip-flop (1.5) in the first channel and the third input is connected to the output of the D flip-flop (4.4) in the fourth channel of the second store (6) and the fourth input is connected to the Q-output of the last D flip-flop (2.4) in the second channel of the first store (5), that in the case of the third multiplexer (30) the first input is connected to the Q-output of the D flip-flop (1.5) in the first channel and the second input is connected to the Q-output of the D flip-flop (4.4) in the fourth channel of the second store (6) and the third input is connected to the Q-output of the last D flip-flop (3.4) in the third channel and the fourth input is connected to the Q-output of the last D flip-flop (2.4) in the second channel of the first store (5) and that in the case of the fourth multiplexer (31) the first input is connected to the Q-output of the D flip-flop (4.4) in the fourth channel of the second store (6), the second input is connected to the output of the last D-flop (3.4) in the third channel, the third input is connected to the Q-output of the last D-flop (2.4) in the second channel and the fourth input is connected to the Q-output of the last D flip-flop (1.4) in the first channel of the first store (5) (Fig. 2).

5. An arrangement as claimed in claim 1, characterised in that in the decoder (13) four AND-gates (32 to 35) are provided each having inverting inputs, that the inputs of the first AND-gate (3.2) are connected to the outputs of the second (1.2), third (1.3) and fourth (1.4) D flip-flops in the first channel and to the outputs of the first (2.1, 3.1, 4.1), the second (2.2, 3.2, 4.2) and the third (2.3, 3.3, 4.3) D flip-flops in the second, third and fourth channels of the first store (5), where the Q̄-output is used in the case of the third D flip-flop (1.3) in the first channel and in the case of the second D flip-flop (3.2) in the third channel and where the Q-output is used in the case of the remaining D flip-flops, that the inputs of the second AND-gates (33) are connected to the outputs of the second (1.2, 2.2), the third (1.3, 2.3) and the fourth (1.4, 2.4) D-flip-flop in the second and third channel and to the outputs of the first (3.1, 4.1), second (3.2, 4.2) and third (3.3., 4.3) D flip-flops in the third and fourth channels, where the Q̄-output is used in the case of the second D flip-flop (4.2) in the fourth channel and the Q-output is used in the case of the remaining D flip-flops, that the inputs of the third AND-gate (34) are connected to the outputs of the second (1.2, 2.2, 3.2), the third (1.3, 2.3, 3.3) and fourth (1.4, 2.4, 3.4) D flip-flops in the first, second and third channels and to the outputs of the first (4.1), the second (4.2) and third (4.3) D flip-flops in the fourth channel of the first store (5), where the Q̄-output is used in the case of the third D flip-flop (1.3, 2.3) in the first and second channels and the Q-output is used in the case of the remaining D flip-flops, and that the inputs of the fourth AND-gate (35) are connected to the outputs of the first (1.1, 2.1, 3.1, 4.1), second (1.2, 2.2, 3.2, 4.2) and third (1.3, 2.3, 3.3, 4.3) D flip-flops in the first, second, third and fourth channels of the first store (5), where the Q̄-output is used in the case of the third D flip-flop (1.3) in the first channel and in the case of the second D flip-flop (4.2) in the fourth channel and where the Q-output is required in the case of the remaining D flip-flops (Fig. 3).

6. An arrangement as claimed in claim 2, characterised in that in the fourth store (14) following each of the four outputs of the decoder (13) a D flip-flop (36 to 39) is provided with a Q-output and that the clock inputs (C) of all the D flip-flops (36 to 39) are connected to one another (Fig. 3).

7. An arrangement as claimed in claim 2, characterised in that in the fifth store (15) following each output of the fourth store (14) a D flip-flop (40 to 43) is provided with a Q-output and that a fifth AND-gate (44) is provided, the first input of which serves as clock input (25) and the second input (21) of which serves as control signal input and the output of which is connected to the clock inputs (C) of all the D flip-flops (40 to 43) (Fig. 3).

8. An arrangement as claimed in claim 2, characterised in that the logic-linking arrangement (17) includes OR-gates (45 to 48), the first input of each of which is connected to the Q-output of a D flip-flop (40 to 43) in the fifth store (15), and the other input of each of which is connected to the control signal input (21), sixth AND-gates (49 to 52), the input of each of which is connected to the output of in each case one of the OR-gates (45 to 48) and the other input of each of which is connected to the D input of the preceding D flip-flop (40 to 43) in the fifth store (15), and a further OR-gate (53), the inputs of which are in each case connected to an output of the AND-gates (49 to 52) (Fig. 3).

9. An arrangement as claimed in claim 2, characterised in that the frame counter (18) includes a shift register (55), whose input is connected to the output (22) of the logic-linking arrangement (17) and has a number of D flip-flops (58 to 61) with a Q-output corresponding to the number of channels in the transmission path, a drive arrangement (54) for the shift register (55), a setting pulse arrangement (56) for a clock signal supply unit (19), and a monitoring arrangement (57) (Fig. 4).

10. An arrangement as claimed in one of the preceding claims, characterised by its use at a bit rate of 140 Mbit/s and 565 Mbit/s in the incoming channel.

**Revendications**

1. Dispositif pour synchroniser des canaux de départ au niveau des sorties d'un démultiplexeur au moyen d'un indicatif de trame apparaissant sous la forme d'un bloc dans le canal d'arrivée dans un système de multiplexage temporel, caractérisé par le fait qu'il est prévu, dans la voie de transmission, une première mémoire (5), une seconde mémoire (6), un répartiteur de canaux (7) relié à la première mémoire (5) et à la seconde mémoire (6), et une troisième mémoire (8), qu'il est prévu, dans la voie de commande, entre la première mémoire (5) et le répartiteur de canaux (7), un décodeur (13), une quatrième mémoire (14), une cinquième mémoire (15) et un codeur (16), et qu'il est prévu, en aval de la quatrième mémoire (14) et de la cinquième mémoire (15), un dispositif logique (17) en aval duquel est branché un compteur de trames (18), qui commande la cinquième mémoire (15) et le circuit logique (17) (figure 1).

2. Dispositif suivant la revendication 1 pour quatre canaux de départ, pour la synchronisation sur un indicatif de trame apparaissant sous la forme d'un bloc à douze chiffres, caractérisé par le fait que dans la première mémoire (5), quatre bascules bistables de type D (1.1 à 1.4) sont branchées en montage itératif dans le premier canal, quatre bascules bistables de type D (2.1 à 2.4) sont branchées en montage itératif dans le second canal, quatre bascules bistables de type D (3.1 à 3.4) sont branchées en montage itératif dans le troisième canal et trois bascules bistables de type D (4.1 à 4.3) sont branchées en montage itératif dans le quatrième canal, auquel cas on utilise la sortie Q̄ pour la troisième bascule bistable de type D (1.3) dans le premier canal et pour la seconde bascule bistable de type D (2.2, 3.2, 4.2) dans le second, le troisième et le quatrième canal, tandis que la sortie Q est raccordée pour les autres bascules bistables de type D (figure 2).

3. Dispositif suivant la revendication 2, caractérisé par le fait que dans la seconde mémoire (6) et dans la troisième mémoire (8), il est prévu une bascule bistable de type D respective (1.5, 2.5, 3.5, 4.4 : 1.6, 2.6, 3.6, 4.5) comportant uniquement une sortie Q par canal, et que les entrées de cadence (C) de toutes ces bascules bistables de type D sont reliées entre elles (figure 2).

4. Dispositif suivant la revendication 2, caractérisé par le fait qu'il est prévu, dans le répartiteur de canaux (7), quatre multiplexeurs (28 à 31) comportant respectivement deux entrées (26, 27) pour un mot de code de commande, que dans le premier multiplexeur (28), la première entrée est reliée à la sortie Q de la bascule bistable de type D (3.5) dans le troisième canal, la seconde entrée est reliée à la sortie Q de la bascule bistable de type D (2.5) dans le second canal, la troisième entrée est reliée à la sortie de la bascule bistable de type D (1.5) dans le premier canal, et la quatrième entrée est reliée à la sortie Q de la bascule bistable de type D (4.4) dans le quatrième canal de la seconde mémoire (6), que dans le second multiplexeur (29), la première entrée est reliée à la sortie Q de la bascule bistable de type D (2.5) dans le second canal, la seconde entrée est reliée à la sortie Q de la bascule bistable de type D (1.5) dans le premier canal, la troisième entrée est reliée à la sortie de la bascule bistable de type D (4.4) dans le quatrième canal de la seconde mémoire (6), et la quatrième entrée est reliée à la sortie Q de la dernière bascule bistable de type D (2.4) dans le second canal de la première mémoire (5), que, dans le troisième multiplexeur (30), la première entrée est reliée à la sortie Q de la bascule bistable de type D (1.5) dans le premier canal, et la seconde entrée est reliée à la sortie Q de la bascule bistable de type D (4.4) dans le quatrième canal de la seconde mémoire (6), et la troisième entrée est reliée à la sortie Q de la dernière bascule bistable de type D (3.4) dans le troisième canal, et la quatrième entrée est reliée à la sortie Q de la dernière bascule bistable de type D (2.4) dans le second canal de la première mémoire (5), et que, dans le quatrième multiplexeur (31), la première entrée est reliée à la sortie Q de la bascule bistable de type D (4.4) dans le quatrième canal de la seconde mémoire (6), la seconde entrée est reliée à la sortie de la première bascule de type D (3.4) dans le troisième canal, la troisième entrée est reliée à la sortie Q de la dernière bascule bistable de type D (2.4) dans le second canal et la quatrième entrée est reliée à la sortie Q de la dernière bascule bistable de type D (1.4) dans le premier canal de la première mémoire (5). (figure 2).

5. Dispositif suivant la revendication 1, caractérisé par le fait qu'il est prévu dans le décodeur (13), des portes ET (32 à 35) comportant des entrées inverseuses ; que les entrées de la première porte ET (3.2) sont reliées aux sorties de la seconde bascule bistable de type D (1.2), de la troisième bascule bistable de type D (1.3) et de la quatrième bascule bistable de type (1.4) dans le premier canal et aux sorties de la première bascule bistable de type D (2.1, 3.1, 4.1), de la seconde bascule bistable de type (2.2, 3.2, 4.2) et de la troisième bascule bistable de type D (2.3, 3.3, 4.3) dans le second, le troisième et le quatrième canal de la première mémoire (5), auquel cas la sortie Q̄ est utilisée dans la troisième bascule bistable de type D (1.3) dans le premier canal et dans la seconde bascule bistable de type D (3.2) dans le troisième canal, et la sortie Q est utilisée dans les autres bascules bistables de type D, que les entrées de la seconde porte ET (33) sont reliées aux sorties de la seconde bascule bistable de type D (1.2, 2.2), de la troisième bascule bistable de type D (1.3, 2.3) et de la quatrième bascule bistable de type D (1.4, 2.4) du second et du troisième canal et aux sorties de la première bascule bistable de type D (3.1, 4.1), de la seconde bascule bistable de type D (3.2, 4.2) et de la troisième bascule bistable de type D (3.3, 4.3) dans le troisième et dans le quatrième canal, auquel cas on utilise la sortie Q̄ dans la seconde bascule bistable de type D (4.2) dans le quatrième canal et la sortie Q dans les autres bascules bistables de type D, que les entrées de la troisième porte ET (34) sont reliées aux sorties de la seconde bascule bistable de type D (1.2, 2.2, 3.2), de la troisième bascule bistable de type D (1.3, 2.3, 3.3) et de la quatrième bascule bistable de type (1.4, 2.4, 3.4) dans le premier, le second et le troisième canal et aux sorties de la première bascule bistable de type D (4.1), de la seconde bascule bistable de type D (4.2) et de la troisième bascule bistable de type D (4.3) dans le quatrième canal de la première mémoire (5), auquel cas on utilise la sortie Q̄ dans la troisième bascule bistable de type D (1.3, 2.3) dans le premier et dans le second canal et la sortie Q dans les autres bascules bistables de type D, et que les entrées de la quatrième porte ET (35) sont reliées aux sorties de la première bascule bistable de type D (1.1, 2.1, 3.1, 4.1), de la seconde bascule bistable de type D (1.2, 2.2, 3.2, 4.2) et de la troisième bascule bistable de type D (1.3, 2.3, 3.3, 4.3) dans le premier, le second, le troisième et le quatrième canaux de la première mémoire (5), auquel cas on a besoin de la sortie Q̄ dans la troisième bascule bistable de type D (1.3) dans le premier canal et dans la seconde bascule bistable de type D (4.2) dans le quatrième canal et de la sortie Q dans les autres bascules bistables de type D (figure 3).

6. Dispositif suivant la revendication 2, caractérisé par le fait que dans la quatrième mémoire (14) il est prévu, en aval de chacune des quatre sorties du décodeur (13), une bascule bistable de type D (36 à 39) possédant une sortie Q, et que les entrées de cadence (Q) de toutes les bascules bistables de type D (36 à 39) sont reliées entre elles (figure 3).

7. Dispositif suivant la revendication 2, caractérisé par le fait que dans la cinquième mémoire (15) il est prévu, en aval de chaque sortie de la quatrième mémoire (14), une bascule bistable de type D (40 à 43) comportant une sortie Q, et qu'il est prévu une cinquième porte ET (44), dont la première entrée est utilisée comme entrée de cadence (25) et dont la seconde entrée (21) est utilisée en tant qu'entrée des signaux de commande et dont la sortie est reliée aux entrées de cadence (C) de toutes les bascules bistables de type D (40 à 43) (figure 3).

8. Dispositif suivant la revendication 2, caractérisé par le fait qu'il est prévu, dans le circuit logique (17), des portes OU (45 à 48), dont une entrée est reliée respectivement à la sortie Q d'une bascule bistable de type D (40 à 43) dans la cinquième mémoire (15) et dont l'autre entrée est reliée respectivement à l'entrée (21) des signaux de commande, des sixièmes portes ET (49 à 52) dont l'entrée est reliée à la sortie respectivement de l'une des portes OU (45 à 48) et dont l'autre entrée est reliée respectivement à l'entrée D de la bascule bistable de type D (40 à 43), branchée en amont, dans la cinquième mémoire (15), et qu'il est prévu une autre porte OU (53), dont les entrées sont reliées respectivement à une sortie des portes ET (49 à 52) (figure 3).

9. Dispositif suivant la revendication 2, caractérisé par le fait qu'il est prévu, dans le compteur de trames (18), un registre à décalage (55), dont l'entrée est reliée à la sortie (22) du dispositif logique (17), et un nombre, qui correspond au nombre des canaux dans la voie de transmission, de bascules bistables de type D (58 à 61) possédant une sortie Q, un dispositif de commande (54) pour le registre à décalage (55), un dispositif (56) délivrant des impulsions de positionnement pour un dispositif (19) de délivrance de la cadence et pour un dispositif de contrôle (57) (figure 4).

10. Dispositif suivant l'une des revendications précédentes, caractérisé par son utilisation dans le cas d'une cadence binaire de 140 Mbits/s et de 565 Mbits/s dans le canal d'arrivée.

FIG 1

FIG 2

FIG 3

FIG 4

FIG 5

# FIG 6

# FIG 7